Europäisches Patentamt

European Patent Office

Office européen des brevets

(19)

(11) Veröffentlichungsnummer: **0 072 524**
**B2**

(12) **NEUE EUROPÄISCHE PATENTSCHRIFT**

(45) Veröffentlichungstag der neuen Patentschrift:
14.03.90

(51) Int. Cl.⁵: **B 60 N 2/02**

(21) Anmeldenummer: **82107251.9**

(22) Anmeldetag: **10.08.82**

(54) Sitzverstellung, insbesondere für einen Kraftfahrzeugsitz.

(30) Priorität: **14.08.81 DE 3132235**

(43) Veröffentlichungstag der Anmeldung:
**23.02.83 Patentblatt 83/08**

(45) Bekanntmachung des Hinweises auf die
Patenterteilung:
**19.03.86 Patenblatt 86/12**

(45) Bekanntmachung des Hinweises auf die
Entscheidung über den Einspruch:
**14.03.90 Patentblatt 90/11**

(84) Benannte Vertragsstaaten:
**DE FR GB IT SE**

(56) Entgegenhaltungen:
**DE-A-2 729 770**
**DE-A-2 747 584**
**DE-U-1 915 808**

(73) Patentinhaber: **Brose Fahrzeugteile GmbH & Co.
KG
Ketschendorfer Strasse 38-48
D-8630 Coburg (DE)**

(72) Erfinder: **Hofmann, Hans-Otto
Schwalbenweg 4
D-8631 Niederfüllbach (DE)**

(74) Vertreter: **Prechtel, Jörg et al
Patentanwälte H. Weickmann, Dr. K. Fincke F.A.
Weickmann, B. Huber Dr. H. Liska, Dr. J. Prechtel
Möhlstrasse 22 Postfach 860 820
D-8000 München 86 (DE)**

EP 0 072 524 B2

Courier Press, Leamington Spa, England.

## Beschreibung

Die Erfindung betrifft eine Sitzverstellung nach dem Oberbegriff des Anspruchs 1.

Eine Sitzverstellung mit einer Stiftverriegelung mit diesen Merkmalen ist in Verbindung mit einer Längsverstelleinrichtung bekannt (DE—A—27 29 770). In die an einer Rastschiene ausgebildeten Stiftausnehmungen können Stifte blockierend einrücken, die mittels Federn in Blockierrichtung vorgespannt sind. Diese Federn stützen sich offenbar an einem ortsfesten Teil der Stiftverriegelung ab. Die Blockierung kann mit Hilfe einer in Langlöcher der Stifte eingreifenden Schleppkupplung gelöst werden. Bei einer Ausführungsform mit in die Rastschiene eingreifendem Sperrzahn durchsetzt dieser ein Scherblech auf einer Seite der Rastschiene. Eine elektrische Betätigung der Stiftverriegelung ist nicht vorgesehen. Die bekannte Anordnung stellt zwar sicher, daß in sämtlichen möglichen Verstellpositionen wenigstens einer der beiden Stifte in die Stiftausnehmung einrückt; nachteilig an dieser Anordnung ist, daß es unter Umständen, insbesondere bei extrem hohen Belastungen (Crash-Fall), zu Beschädigungen oder sogar zu einem Lösen der Blockierung kommen kann, was unbedingt vermieden werden muß, vor allem dann, wenn am Sitz Sicherheitsgurt-Befestigungspunkte vorgesehen sind. Neben der Möglichkeit einer Verformung der Rastschiene besteht nämlich auch die Möglichkeit einer Beschädigung der Stifte und deren Halterung, da die auftretenden Kräfte von der Schiene in die Halterung abgeleitet werden müssen. Einer Verstärkung dieser Teile, z.B. durch Einsatz einer gehärteten Rastschiene, stehen die hierdurch verursachten erhöhten Herstellungskosten entgegen.

Die Aufgabe der Erfindung liegt darin, eine mittels elektrisch betätigbarer Stiftverriegelung kontinuierlich verstell- und blockierbare Sitzverstellung mit einfachem, kostengünstigem Aufbau bereitzustellen, welche eine sichere Blockierung auch bei sehr hohen Kräften und bei Stromausfall gewährleistet.

Diese Aufgabe wird durch die kennzeichnenden Merkmale des Anspruchs 1 in Verbindung mit den Merkmalen des Oberbegriffs gelöst.

Durch Unterstromsetzen des dem Magnetanker zugeordneten Elektromagneten wird der Stiftträger und mit diesem die vorgesehene Anzahl der Stifte aus der Blockierstellung zurückgezogen, so daß der Sitz ungehindert verstellt werden kann. Bei Abschaltung des Stromkreises ebenso wie bei Stromausfall, drückt die Schraubendruckfeder die Stiftverriegelung selbsttätig in ihre Blockierstellung. Hierbei können diejenigen Stifte, die einer der Stiftausnehmungen gegenüberliegen, entsprechend ausweichen. Die bei einer Längsverstellung ohnehin vorgesehene Zahnstange aus in der Regel gehärtetem Material (z.B. hochlegierter Vergütungsstahl), ist erfindungsgemäß mit den Stiftausnehmungen versehen, so daß sich der Einsatz einer gehärteten Rastschiene erübrigt.

Aufgrund des Einsatzes der Haltewinkel zu beiden Seiten von Zahnstange bzw. verschwenkbarem Teil, ergibt sich ein unmittelbarer Kraftweg von der Zahnstange bzw. vom verschwenkbaren Teil über den jeweils blockierend eingerückten Stift zu den beidseitigen Haltewinkeln und von diesen zum jeweiligen Träger, beispielsweise im Falle der Längsverstellung zum Karosserieboden. Es werden folglich lediglich die Stifte in ihrem kurzen Längenabschnitt zwischen den Haltewinkeln belastet; im übrigen sind die Stifte sowie der Stiftträger unbelastet von im Crash-Fall auftretenden Kräften.

Bei einer Längsverstellung mit zwei in Verstellrichtung nebeneinander angeordneten Stiften ist die in Verstellrichtung genommene Breite der Stiftausnehmung gleich der Summe aus dem Durchmesser der beiden Stifte und dem dritten Teil des Abstandes der Stiftachsen; der Abstand der Mitten benachbarter Ausnehmungen ist gleich zwei Drittel des Abstandes der Stiftachsen.

Bei einer Neigungs- bzw. Höhenverstelleinrichtung wird vorgeschlagen, die in dem verschwenkbaren Teil angeordneten Ausnehmungen auf mehreren, der Anzahl der Stifte entsprechenden, konzentrischen Kreisbögen anzuordnen. Auf diese Weise lassen sich die Ausnehmungen auf einem relativ kleinen Kreissektor unterbringen.

Es wird wiederum kein zusätzliches Teil benötigt, wenn die Ausnehmungen in einem Arm eines zweiarmigen Schwenkhebels vorgesehen sind, der mit einem weiteren zweiarmigen, mit einem ritzelgetriebenen Zahnsektor versehenen Schwenkhebel drehfest verbunden ist. Diese beiden Schwenkhebel dienen dem Anheben bzw. Absenken des Sitzes.

Die Vorspannung der Stifte in Blockierrichtung wird bevorzugt von einer in einer am Stiftträger angebrachten Lagerhülse für den Stift angeordneten Vorspannfeder bereitgestellt, die sich einerseits an einem durchmesservergrößerten Bund des Stiftes und andererseits an einem Lagerhals an einem Ende der Lagerhülse abstützt.

Die Stiftverriegelung kann automatisch betrieben werden, wenn sie, wie vorgeschlagen, elektromechanisch mittels wenigstens eines Elektromagneten betätigbar ist. Die Stiftverriegelung blockiert, wenn keine Steuerspannung anliegt, so daß volle Sicherheit bei Stromausfall gewährleistet ist.

Um bei mittels Verstellmotor betätigbarer Sitzverstellung zu verhindern, daß der bzw. die Verstellmotoren bei verriegelter Stiftverriegelung betrieben werden können, ist eine Verzögerungsschaltung vorgesehen, die den bzw. die Verstellmotoren erst nach erfolgter Entriegelung der Stiftverriegelung in Betrieb setzt und umgekehrt erst nach Stillstand des bzw. der Verstellmotoren die Stiftverriegelung verriegelt.

Die Erfindung wird im folgenden an einem Ausführungsbeispiel anhand der Zeichnung erläutert.

Es zeigt:

Fig. 1 eine Seitenansicht einer Sitzverstellung im Schnitt entlang der Linie I-I in Fig. 3.

Fig. 2 eine Draufsicht auf die in Fahrtrichtung linke Hälfte der Sitzverstellung gemäß Fig. 1;

Fig. 3 eine Draufsicht auf die rechte Hälfte;

Fig. 4A bis D eine Reihe von Teilschnitten der Sitzverstellung gemäß Fig. 1 bis 3, und zwar

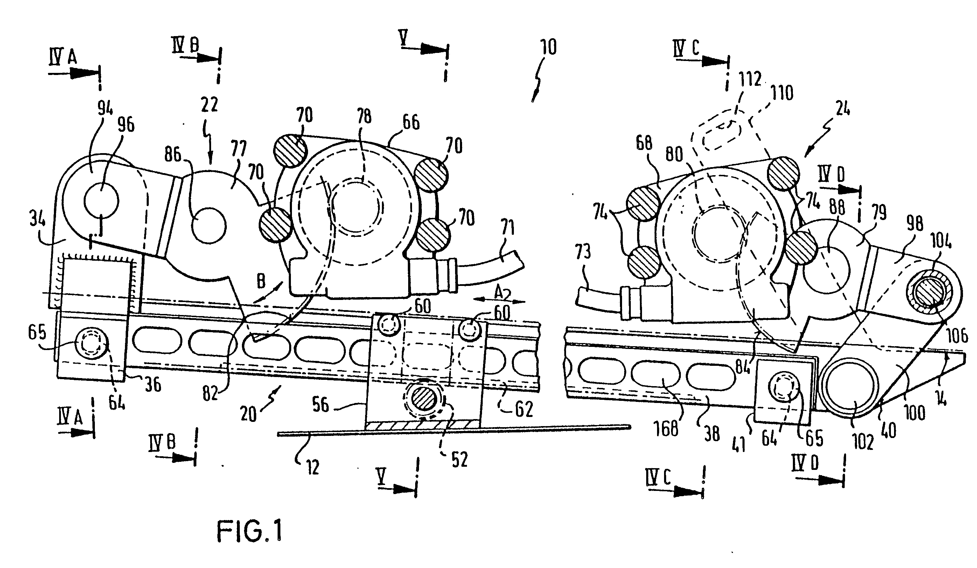

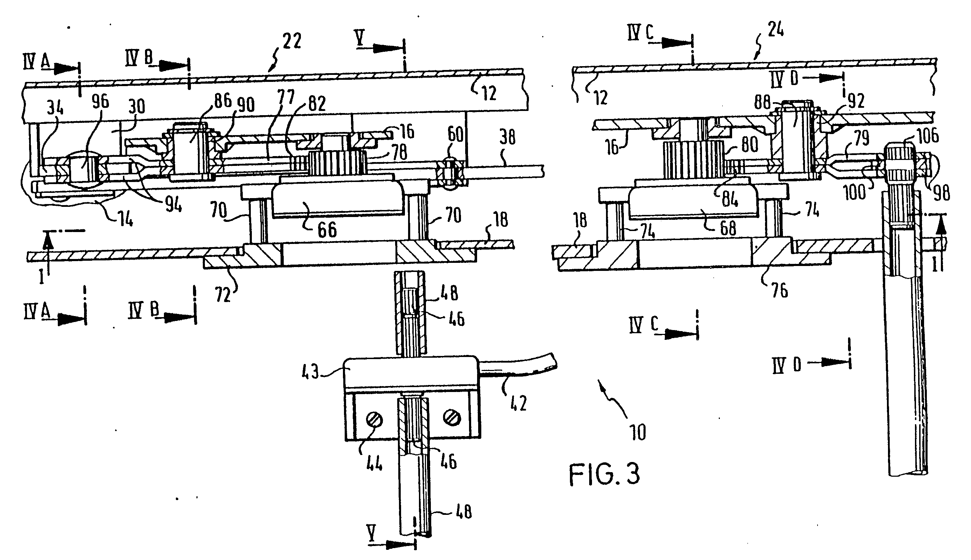

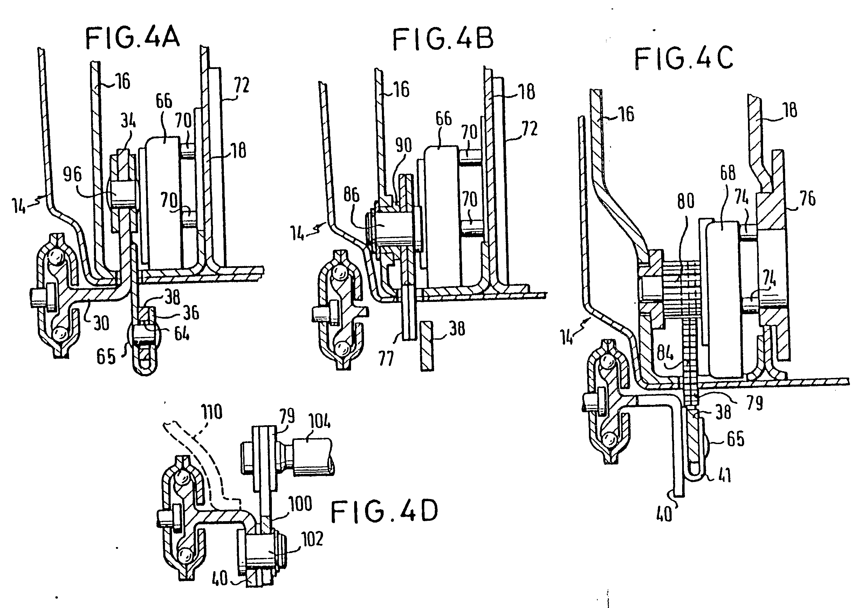

Fig. 4A einen Schnitt entlang der Linie IVA-IVA in den Fig. 1 und 3;

Fig. 4B dementsprechend einen Schnitt entlang der Linie IVB-IVB;

Fig. 4C dementsprechend einen Schnitt entlang der Linie IVC—IVC.;

Fig. 4D dementsprechend einen Schnitt entlang der Linie IVD-IVD;

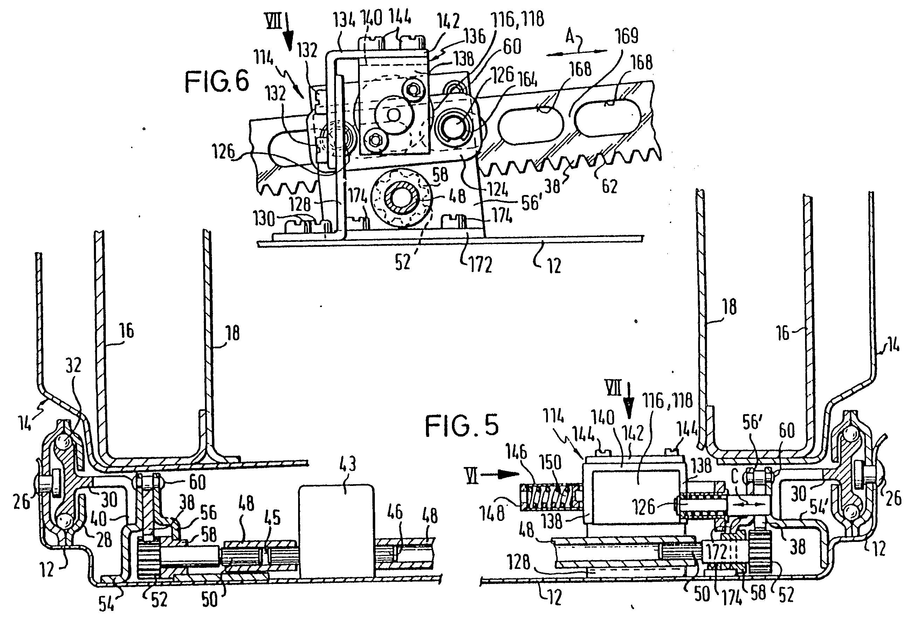

Fig. 5 einen Schnitt über die gesamte Breite der Sitzverstellung, und zwar entlang der Linie V-V in den Fig. 1 und 3;

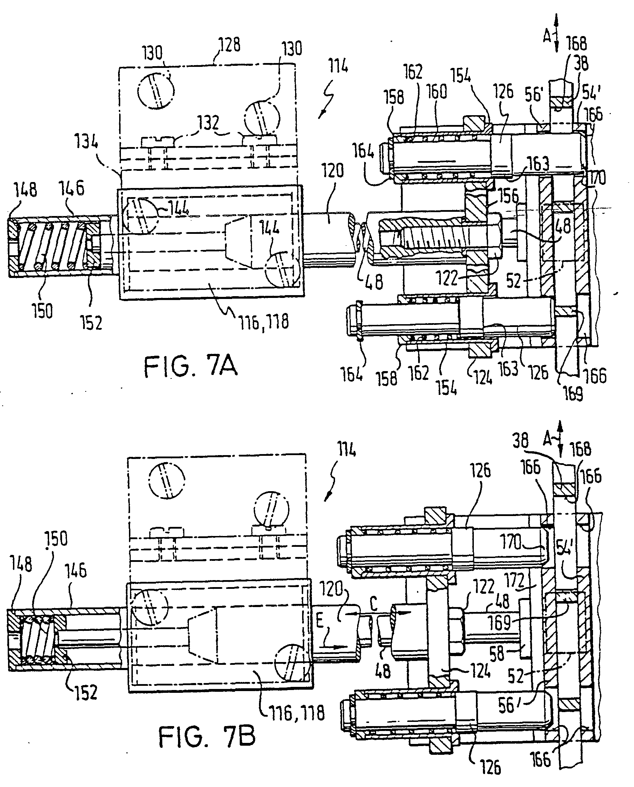

Fig. 6 eine Teilansicht in Richtung des Pfeils VI in Fig. 5;

Fig. 7A und 7B eine Draufsicht in Richtung des Pfeils VII in Fig. 5 auf eine erfindungsgemäße Stiftverriegelung, und zwar

Fig. 7A in blockierendem Eingriff;

Fig. 7B außer Eingriff;

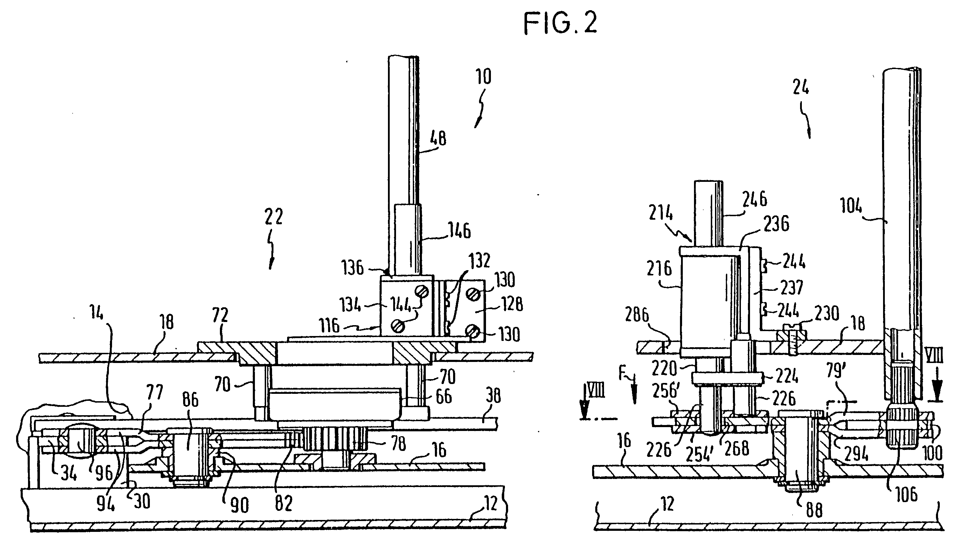

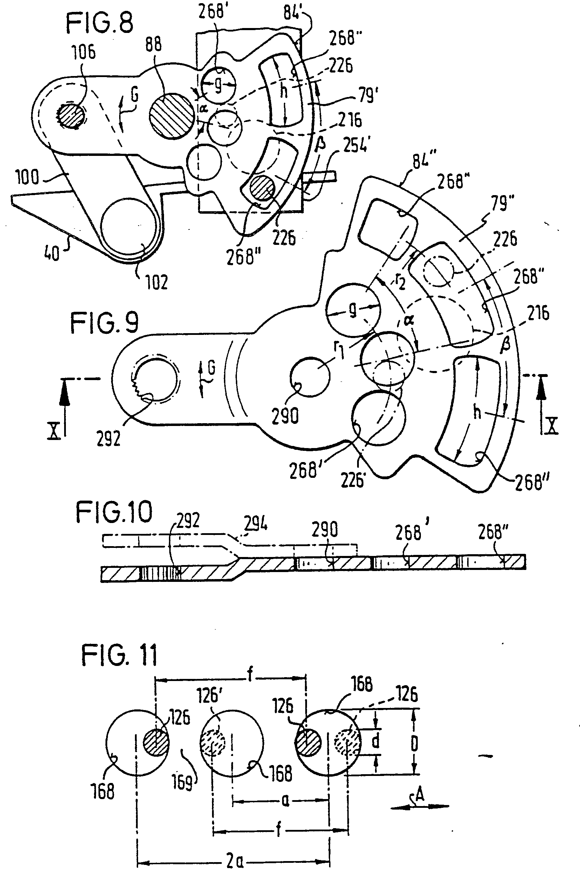

Fig. 8 einen Detailschnitt entlang der Linie VIII—VIII in Fig. 2;

Fig. 9. eine Ansicht ähnlich Fig. 8 auf einen Doppelarmhebel in einer weiteren Ausführungsform;

Fig. 10 einen Schnitt des Doppelarmhebels gemäß Fig. 9 entlang der Linie X-X; und

Fig. 11 eine schematische Darstellung von Stiften und Stiftausnehmungen als Grundlage zur Berechnung von Stift- und Stiftausnehmungsdimensionen.

Die in den Figuren dargestellte Sitzverstellung ist allgemein mit 10 bezeichnet. Sie ist zwischen einer Bodenwanne 12 (siehe auch Fig. 5) eines Kraftfahrzeuginnenraums und einer Sitzschale 14 eines nicht dargestellten Kraftfahrzeugsitzes angeordnet. In den Fig. 1 bis 3 sowie 7 ist die Sitzschale 14 zum Teil weggelassen. Wie den Schnitten gemäß Fig. 4 und 5 entnommen werden kann, ist innerhalb der Sitzschale 14 ein kastenartiges Profil an beiden Längsseiten ausgebildet, welches aus einer ersten Wand 16 mit C-Profil und einer zweiten Wand 18 mit angenähert L-Profil gebildet ist.

Die Sitzverstellung 10 dient der Längsverstellung (in Fig. 1 in Richtung des Doppelpfeils A) sowie der Neigungs- und Höhenverstellung des Kraftfahrzeugsitzes bzw. der Sitzschale 14 gegenüber der Bodenwanne 12. Bei der dargestellten Ausführungsform der Erfindung folgt auf die Bodenwanne 12 in Kraftrichtung eine Längsverstelleinrichtung 20 und auf diese eine an der Sitzschale 14 angebrachte Höhenverstelleinrichtung aus einer vorderen Neigungsverstelleinrichtung 22 und einer hinteren Neigungsverstelleinrichtung 24. Die Vorteile der Erfindung lassen sich jedoch auch dann erzielen, wenn auf die Bodenwanne umgekehrt ist, d. h. wenn auf die Bodenwanne zuerst die Neigungs- bzw. Höhenverstelleinrichtung und erst anschließend die Längsverstelleinrichtung folgt, wie dies beispielsweise in der DE—OS—27 13 693 beschrieben ist.

Die Längsverstelleinrichtung 20 umfaßt an jeder Längsseite des Sitzes jeweils eine im Querschnitt angenähert C-förmige Tragschiene 28, die beispielsweise mittels Nietbolzen 26 starr mit der Bodenwanne 12 verbunden ist. In jeder Tragschiene 28 ist eine im Querschnitt angenähert T-förmige Verstellschiene 30 eingesetzt und mittels Lagerkugeln 32 in Richtung A längsverschiebbar gelagert. Am vorderen Ende der Verstellschiene 30 (in Fig. 1 links) steht eine Lasche 34 der Verstellschiene 30 senkrecht nach oben ab, an der wiederum ein nach unten abstehender Haltebügel 36 für eine Zahnstange 38 angeschweißt ist (Fig. 4A). Die Zahnstange 38 verläuft parallel zu den Schienen 28 und 30, ist jedoch etwas kürzer als diese Schienen. Das hintere Zahnstangenende wird von einem weiteren Haltebügel 41 gehalten, der wiederum an einer (nach unten abstehenden) Lasche 40 am hinteren Ende der Verstellschiene 30 angeschweißt ist.

Zur Längsverstellung der Verstellschiene 30 ist ein nicht dargestellter Verstellmotor vorgesehen, der über eine in Fig. 3 angedeutete flexible Getriebewelle 42 an ein Getriebe 43 angreift, welches beispielsweise mittels Schrauben 44 an der Bodenwanne 12 starr befestigt ist. Beiderseits des Getriebes 43 stehen geriffelte Antriebswellen 46 vor, die jeweils über ein Kupplungsrohr 48 mit einem entsprechend geriffelten Wellenende 50 eines jeweils mit einer der Zahnstangen 38 kämmenden Ritzels 52 drehfest verbunden sind. Jedes Ritzel 52 ist dabei zwischen zwei beidseits der Zahnstangen 38 angeordneten Haltewinkeln 54 und 56 angeordnet, wobei in dem innen gelegenen Haltewinkel 56 eine Drehlagerbuchse 58 für das Ritzel 52 eingesetzt ist. Die beiden Haltewinkel 54 und 56 sind an ihrem unteren Ende jeweils an der Bodenwanne 12 befestigt, beispielsweise mit dieser punktverschweißt. Die beiden oberen Enden der Haltewinkel 54 und 56 umgreifen die Zahnstange 38 und sind urmittelbar oberhalb der Zahnstange 38 mittels zweier Doppelnietköpfe 60 (Fig. 1 und 5) starr miteinander verbunden. Der untere, mit einer Längsverzahnung 62 ausgebildete Längsrand der Zahnstange 38 kämmt mit dem Ritzel 52. Auf diese Weise ist die Zahnstange 38 mit lediglich geringem Bewegungsspiel in einen Führungsraum eingepaßt, der nach oben und nach unten durch die Doppelnietköpfe 60 bzw. das Ritzel 52 begrenzt ist und in Zahnstangenquerrichtung durch die oberen Enden der Haltewinkel 54 und 56. Dies gewährleistet einen spielfreien Eingriff des Ritzels 52 in die Längsverzahnung 62.

Um hierbei Fertigungstoleranzen in einfacher Weise ausgleichen zu können, sind die beiden Endender Zahnstange 38 jeweils mit einem quer zur Zahnstangenlänosrichtung orientierten Langloch 64 ausgebildet, welches ein zylindrischer Nietbolzen 65 zur Verbindung mit den jeweiligen Haltebügeln 36 bzw. 41 durchsetzt.

Die Längsverstelleinrichtung 20 ist an beiden Längsseiten des Sitzes gleich ausgebildet. Um den Sitz in Richtung des Doppelpfeils A längs zu verstellen, werden die beiden Kupplungsrohre 48 gleichzeitig in Drehung versetzt und dementsprechend die beiden Ritzel 52, die die beiden Zahnstangen 38 in der gewünschten Weise verschieben und damit die jeweilige Verstellschiene 30.

Mit der Verstellschiene 30 ist der Sitz über die beiden Neigungsverstelleinrichtungen 22 und 24 verbunden. Jede Neigungsverstelleinrichtung 22, 24 besteht aus einem Verstellgetriebe 66 bzw. 68, welches jeweils über ein abgebrochen dargestelltes flexibles Getrieberohr 71 bzw. 73 mit einem entsprechenden, nicht dargestellten Verstellmotor verbunden ist. Wie insbesondere den Fig. 4A bis C entnommen werden kann, sind die Verstellgetriebe 66 und 68 jeweils im Inneren der Sitzschale 14, und zwar zwischen den Wänden 16 und 18, angeordnet. Das Getriebe 66 ist über vier Abstandsbolzen 70 an einer Halteplatte 72 starr befestigt, die wiederum an der Wand 18 angebracht ist. Dementsprechend ist auch das Getriebe 68 über Abstandsbolzen 74 und eine Halteplatte 76 an der Wand 18 befestigt.

Jedes Getriebe 66 und 68 treibt einen Doppelarmhebel 77 bzw. 79 an, und zwar dadurch, daß ein in Fig. 1 angedeutetes Zahnrad 78 bzw. 80 einen Zahnsektor 82 bzw. 84 des jeweiligen Doppelarmhebels 77 bzw. 79 antreibt. Jeder Doppelarmhebel 77,79 ist an der Wand 16 drehbar gelagert, nämlich an einem Lagerbolzen 86 bzw. 88, der wiederum in eine Lagerhülse 90 bzw. 92 in der Wand 16 eingesetzt ist.

Der vordere Doppelarmhebel 77, dessen einer Arm vom Zahnsektor 82 gebildet ist, ist mit seinem anderen Arm 94 an der Lasche 34 über einen Gelenkbolzen 96 angelenkt. Hierbei umgreift der aus zwei aneinanderliegenden Teilen gebildete Doppelarmhebel 77 die Lasche 34 gabelartig. Wie Fig. 2 zeigt, ist der auf der linken Sitzseite ausgebildete Teil der vorderen. Neigungsverstelleinrichtung 22 genau so ausgebildet, wie der vorstehend beschriebene Teil auf der rechten Sitzseite. Bei einer gleichzeitigen Betätigung der den beiden Verstellgetrieben 66 zugeordneten Verstellmotoren wird daher der vordere Sitzrand entsprechend gehoben oder abgesenkt.

Die hintere Neigungsverstelleinrichtung 24 entspricht in ihrem Aufbau im wesentlichen der vorderen Sitzverstelleinrichtung 22, mit dem Unterschied, daß der Doppelarmhebel 79 mit seinem dem Zahnsektor 84 gegenüberliegenden Arm 98 nicht unmittelbar an der Verstellschiene 30, sondern an einem Ende einer Kupplungslasche 100 angelenkt ist, wobei das andere Ende der Kupplungslasche 100 an der Verstellschiene 30 über einen die Lasche 40 durchsetzenden Gelenkbolzen 102 schwenkbar verbunden ist. Der Sitz stützt sich also über den vorderen Doppelarmhebel 77 und über den hinteren Doppelarmhebel 79 unter Zwischenschaltung der Kupplungslasche 100 auf der Verstellschiene 30 ab. Die Kupplungslasche 100 ermöglicht dabei eine freie Winkel- und Höhenverstellung des Sitzes gegenüber der Verstellschiene 30.

Um bei der hinteren Neigungsverstelleinrichtung 24 ein Verstellgetriebe und gegebenenfalls einen Verstellmotor einzusparen, ist der in Fig. 2 dargestellte Doppelarmhebel 79' auf der linken Sitzseite mit dem auf der rechten Seite über ein Kupplungsrohr 104 drehfest verbunden. Hierzu ist ein geriffelter Kupplungsbolzen 106 in jedes der Rohrenden eingesteckt, der die beiden Teile des jeweiligen Doppelarmhebels 79 bzw. 79' quer durchsetzt und in entsprechend geriffelte Aufnahmeöffnungen dieser Teile eingreift. Im Bereich zwischen den Doppelarmhebelteilen ist der jeweilige Kupplungsbolzen 106 mit glatter. Umfangsfläche ausgeführt, um ein Drehlager für die jeweilige Kupplungslasche 100 zu bilden.

Herkömmlicherweise wird ein dem Sitz zugeordneter Sicherheitsgurt unmittelbar an der Karosserie befestigt, also im Falle eines Dreipunkt-Sicherheitsgurts mit dem Schultergurtende an der B-Säule und mit den Enden des Beckengurts beidseits des Sitzes am Kraftfahrzeugboden. Bei einer Verstellung des Sitzes ändert sich die Lage der Gurtbefestigungspunkte relativ zum Sitz bzw. zu der auf dem Sitz befindlichen Person. Dies beeinträchtigt sowohl die Sicherheit als auch den Anlegekomfort. Wird dagegen der Sicherheitsgurt am Kraftfahrzeugsitz befestigt, so ergibt sich das Problem, daß nunmehr die Sitzverstellung sehr hohen Kräften standzuhalten hat, die pro Gurtbefestigungspunkt bis zu 18 000 N betragen können. Bei der vorstehend beschriebenen Sitzverstelleinrichtung 10 werden die Enden des Beckengurts an der Verstellschiene 30 angebracht, beispielsweise über je eine am hinteren Ende der Verstellschienen 30 angeschweißte Gurtlasche, die in den Fig. 1 und 4D strichliert angedeutet ist und die Bezugsziffer 110 trägt. In Fig. 1 ist eine Gurtöse 112 am freien Ende der Gurtlasche 110 angedeutet. Die Gurtlasche 110 macht daher sämtliche Längsverstellbewegungen des Sitzes mit. Gegenüber einer Befestigung der Enden des Beckengurts unmittelbar an der Sitzschale 14 ergibt sich der Vorteil, daß bei einem Unfall lediglich die Längsverstelleinrichtung 20 die Gurtkräfte aufzunehmen hat und nicht die Neigungsverstelleinrichtungen 22 und 24.

Um das Ritzel 52 sowie das vorgeschaltete Verstellgetriebe 43 mit angeschlossenem Verstellmotor von den Gurtkräften zu entlasten, die möglicherweise zu einer Beschädigung dieser Teile führen könnten, ist eine Stiftverriegelung 114 an der linken Sitzseite der Sitzverstellung 10 vorgesehen, die in die linke Zahnstange 38 bei stillstehendem Verstellmotor blockierend eingreift und dadurch die über die linke Gurtlasche 110, die linke Verstellschiene 30 und die Haltebügel 36 und 41 in die linke Zahnstange 38 eingeleiteten Gurtkräfte unmittelbar in die Bodenwanne 12 des Kraftfahrzeugs ableitet. In den meisten Fällen genügt es, lediglich auf einer Sitzseite die Stiftverriegelung 114 vorzusehen, da beide Ritzel 52 über die Kupplungsrohre 48 und die durchgehende Antriebswelle 45 des Getriebes 43 drehfest miteinander verbunden sind und das in Fig. 5 rechte Ritzel 52 von vornherein blockiert ist infolge der Blockierung der in Fig. 5 rechten Zahnstange 38 durch die Stiftverriegelung 114.

Die Stiftverriegelung 114 besteht aus einem Elektromagneten 116, dessen zylindrisches Magnetgehäuse 118 ortsfest und dessen Magnetanker 120 in horizontaler und zur Längsverstellrichtung A senkrechter Richtung C hin und her beweg- .bar ist. Am Magnetanker 120 ist mittels einer Schraube 122 ein quen erlaufender, länglicher Stiftträger 124 etwa mittig befestigt, der wiederum zwei zur Richtung C, parallele Stifte 126 trägt.

Das zylindrische Magnetgehäuse 118 ist über mehrere Bügel mit der Bodenwanne 12 starr verbunden, nämlich über einen ersten in Fig. 6 erkennbaren, mit der Bodenwanne verschraubten (Schrauben 130) L-förmigen Winkel 128, einem zweiten, mit dem ersten Winkel 128 verschrauben (Schrauben 132) L-förmigen Winkel 134 sowie einem dritten U-förmigen Bügel 136, dessen vertikal nach unten verlaufenden Seitenschenkel 138 den zylindrischen Elektromagneten 116 an dessen beiden Stirnflächen umgreifen und dessen obenliegender Mittelschenkel 140 mit dem horizontalen Schenkel 142 des zweiten Winkels 134 verschraubt ist (Schrauben 144).

Das Magnetgehäuse 118 setzt sich auf der vom Stiftträger 124 fernen Seite in einer durchmesserverringerten Hülse 146 fort, deren freies Ende von einem durchbohrten Pfropfen 148 verschlossen ist. Im Inneren der Hulse 146 ist eine Schraubendruckfeder 150 angeordnet, die sich einerseits am Pfropfen 148 und andererseits am in Fig. 7 linken Ende des Magnetankers 120 abstützt, der hierzu mit einem die Hülse 146 angenähert ausfüllenden Kolben 152 versehen ist. Die Druckfeder 150 spannt den Magnetanker 120 also in Fig. 7 nach rechts, d.h. auf die Zahnstange 38 hin vor.

Jeder der Stifte 126 ist innerhalb einer Lagerhülse 154 in Richtung C verschiebbar gelagert. Die Lagerhülse 154 liegt an ihrem in Fig. 7 rechten Ende mit einem durchmesservergrößerten Bund an der rechten Seitenfläche 156 des Stiftträgers 124 an. Am in Fig. 7 linken Ende der Lagerhülse 126 ist ein Lagerring 158 eingesetzt, der ein Linearlager für den Stift 126 bildet. Zwischen der Innenumfangsfläche der Lagerhülse und dem eingeführten Stift 126 ist ein Ringraum 160 ausgebildet, der in axialer Richtung einerseits vom Lagerring 158 und andererseits von einem durchmesservergrößerten Bund 163 des Stifts 126 begrenzt wird. Der Durchmesser des Bundes 163 ist an den Innendurchmesser der Hülse 154 angepaßt. In besagtem Zwischenraum 160 ist eine Vorspannfeder 162 in Form einer Schraubendruckfeder eingesetzt, die den jeweiligen Stift 126 in Fig. 7 nach rechts, also auf die Zahnstange 38 hin, vorspannt. Ein am linken Ende des jeweiligen Stifts 126 angebrachter Sprengring 164 sichert den Stift 126 in der Hülse 154 und legt dadurch die in Fig. 7B dargestellte Endstellung mit maximal nach rechts ausgefahrenem Stift 126 fest.

Wie die Fig. 5 und 7 zeigen, sind die den Haltewinkeln 54 und 56 auf der in Fig. 5 linken Seite entsprechenden Haltewinkel 54' und 56' jeweils mit zwei kreisrunden Löchern 166 versehen, die in Durchmesser und Lage an die beiden Stifte 126 angepaßt sind, so daß die Stifte 126 in die Löcher 166 einfahren können, sofern die zwischen den Haltewinkeln 54' und 56' liegende Zahnstange 38 dies nicht verhindert. Der obere Stift 126 gemäß Fig. 7A ist gerade in die Löcher 166 eingefahren, da die Zahnstange 38 in diesem, Bereich gerade mit einer Ausnehmung 168 entsprechender Größe ausgebildet ist. Um das Einfahren des Stifts 126 zu erleichtern, ist dessen in Fig. 7 rechtes Ende konisch abgeschrägt (Konusfläche 170).

Aus den Fig. 5 bis 7 ist zu entnehmen, daß die Achse des Magnetankers 120 oberhalb der Achse des Kupplungsrohrs 48 angeordnet ist. In Fig. 7 ist das Ritzel 52 strichpunktiert angedeutet. Weiterhin ist eine Knickkante 172 des Haltewinkels 56' erkennbar sowie in den Fig. 5 und 6 Befestigungsschrauben 174, mit denen der Haltewinkel 56' an der Bodenwanne 12 befestigt ist. Ferner erkennt man die in den Haltewinkel 56' eingesetzte Drehlagerhülse 58 für das Kupplungsrohr 48. Die Haltewinkel 54' und 56' sind aneinander wiederum mittels Doppelnietköpfen 60 angebracht.

Die Abmessungen sowie die Anordnung der Stifte 126 ist nun derart auf die Abmessungen und Anordnung der Ausnehmungen 168 der Zahnstange 38 abgestimmt, daß in sämtlichen möglichen Längsverstellpositionen der Zahnstange 38 zumindest einer der beiden Stifte 126 in eine der Ausnehmungen 168 einrücken kann.

Im folgenden soll kurz anhand der Fig. 11 erläutert werden, wie die Abmessungen im Falle zweier Stifte 126 festzulegen sind. In Fig. 11 sind drei in einer Linie nebeneinanderliegende Ausnehmungen 168 gezeigt, wobei der Abstand zwischen den Mittelpunkten benachbarter Ausnehmungen 168 mit a bezeichnet ist und die in Richtung A gemessene Breite der Ausnehmungen 168 mit D. Da die Ausnehmungen gemäß Fig. 11 kreisförmig sind, ist D auch der Kreisdurchmesser, Mit durchgezogener Umrißlinie ist eine Ausgangsposition der beiden Stifte 126 eingezeichnet. Der Abstand der Mittelpunkte beider Stifte 126 beträgt f, die in Richtung A genommene Stiftbreite entspricht dem Stiftdurchmesser d. Aus der Ausgangsposition der Stifte 126 gemäß Fig. 11 werden diese nach rechts (bzw. die die Ausnehmungen 168 tragende Zahnstange nach links) bewegt, bis die mit punktierter Um-rißlinie der Stifte 126 gekennzeichnete Stellung erreicht ist. In dieser Stellung ist der linke Stift 126' gerade in die mittlere Ausnehmung 168 gelangt. Da der linke Stift zwischen diesen Positionen gerade auf den Steg 169 zwischen zwei Ausnehmungen 168 trifft, muß gewährleistet sein, daß der rechte Stift während dieser Zeit stets in eine Ausnehmung 168 einfahren kann. Dies wird durch die dargestellte Anordnung sichergestellt, da zwischen beiden Stellungen der rechte Stifte 126 stets in die am weitesten rechts gelegene der drei Ausnehmungen 168 einfahren kann. In der Ausgangsstellung befindet sich dieser rechte Stift am linken Rand der entsprechenden Ausnehmung 168 und in der punktiert angedeuteten Stellung am rechten Rand.

Aus Fig. 11 lassen sich folgende zwei Beziehungen ableiten:

$$a = f + d - D$$
$$2a = f - d + D$$

Hieraus folgt:

$$D = \frac{f}{3} + d \text{ und}$$

$$a = \frac{2}{3} \times f.$$

Für f = 36mm und d = 9mm ergibt sich ein D von 21mm sowie ein avon 24mm.

Um die Verriegelungseinrichtung 114 in ihre verriegelte Stellung zu bringen, ist lediglich der den Magnetanker 120 in seiner Einfahrstellung gemäß Fig. 7B gegen die Kraft der Feder 150 haltende Haltestrom abzuschalten, woraufhin der Magnetanker 120 von der Feder 150 nach rechts (Richtung E) verschoben wird: Wenigstens einer der beiden Stifte 126 trifft dabei auf eine Ausnehmung 168, in die er eindringt, sowie anschließend in die Kreisöffnung 166 des außenliegen-den Haltewinkels 54'. Im Beispiel der Fig. 7A trifft der untere der beiden Stifte 126 auf einen Steg 169 zwischen zwei Ausnehmungen 168. Da der Stift 126 im Stiftträger 124 gegen Federkraft verschiebbar gelagert ist, kann der Stiftträger 124 trotz anschlagendem unterem Stift 126 weiter in Richtung-E vordringen, bis der obere Stift 126, wie dargestellt, in die Kreisöffnung 166 des Haltewinkels 54' eingedrungen ist. Die dieser Bewegung entgegengerichtete Kraft der zunehmend zusammengedrückten unteren Vorspannfeder 162 ist jedoch wesentlich geringer als die Vorspannkraft der kräftiger dimensionierten Schraubendruckfeder 150 am anderen Ende des Magnetankers 120, so daß auch aus diesem Grunde die Stiftverriegelung 114 nicht daran gehindert ist, in ihre Blokkierstellung gemäß Fig. 7A überzugehen. In dieser Blockierstellung werden in Richtung A der Zugstange 38 angreifende Zugoder Druckkräfte über den jeweils eingerückten Bolzen 126 und die diesen Bolzen mit ihren öffnungen 166 haltenden Haltewinkel 54' und 56' unmittelbar in die Bodenwanne 12 des Kraftfahrzeugs abgeleitet. Die Blockierung ist auch dann gewährleistet, wenn die, Stromversorgung ausfällt, da, wie bereits erwähnt, die Stiftverriegelung 114 eben gerade bei abgeschaltetem Elektromagneten 116 ihre B1ockierstellung gemäß Fig. 7A einnimmt.

Um zu verhindern, daß während eines Verstellbetriebs der Längsverstelleinrichtung 20 sich das Ritzel 52 trotz blockierender Stiftverriegelung 114 dreht, ist eine in den Figuren nicht dargestellte Verzögerungsschaltung vorgesehen, die einerseits zu Beginn der Betätigung der Längsverstelleinrichtung zuerst den Haltestrom an den Elektromagneten 116 anlegt und erst dann mit Verzögerung den entsprechenden Verstellmotor antreibt und andererseits nach Abschalten des Verstellmotors den Haltestrom wiederum mit Verzögerung abschaltet.

Bei Befestigung des oberen Endes des Schultergurts an der Lehne des Kraftfahrzeugsitzes treten größere Drehmomente auf, die über ein entsprechend stabil dimensioniertes, nicht dargestelltes Rückenlehnengelenk auf die Sitzschale 14 und von dieser aus über die Neigungsverstelleinrichtungen 22 und 24 auf die Längsverstelleinrichtung 20 und schließlich auf die Bodenwanne 12 übertragen werden. Die Längsverstelleinrichtung 20 ist ausreichend stabil gegenüber derartigen Kippmomenten. Die auf die vordere Neigungsverstelleinrichtung 22 wirkenden Kräfte sind relativ gering, so daß im allgemeinen keine zusätzlichen Maßnahmen erforderlich sind, um sicherzustellen, daß sich die vordere Neigungsverstelleinrichtung 22 bei einer derartigen Belastung verstellt oder sogar beschädigt wird. Die Selbsthemmung des Antriebsteils aus Verstellgetriebe 66, flexibler Getriebewelle 71 und zugeordnetem Verstellmotor an beiden Seiten des Sitzes reicht aus, um eine selbsttätige Verstellung zu verhindern. Bei der hinteren Neigungsverstelleinrichtung 24 ist lediglich an einer Seite ein selbsthemmend ausgebildeter Antrieb (Verstellgetriebe 68 Getriebewelle 73, zugeordneter Verstellmotor) vorgesehen. Da zudem in diesem Bereich gegebenenfalls relativ hohe Kräfte aufzunehmen sind, ist an der in Fig. 2 dargestellten linken Seite, der Neigungsverstelleinrichtung 24 eine weitere Stiftwerriegelung vorgesehen, die mit 214 bezeichnet ist. Diese hat denselben Aufbau wie die Stiftverriegelung 114; die Teile der Stiftverriegelung 214 sind daher mit den selben Bezugsziffern versehen wie die der Stiftwerriegelung 114, jeweils vermehrt um die Zahl 100.

Die Stiftverriegelung 214 besteht demnach ebenfalls aus einem Elektromagneten 216, der von einem U-förmigen Bügel 236 umfaßt wird, der in diesem Falle jedoch in horizontaler Ebene liegend angeordnet ist. Die Stiftverriegelung 214, die den Doppelarm 79' an der Sitzschale 14 blockierend festlegen soll, ist daher auch an der Sitzschale 14 befestigt. Hierzu ist ein L-Winkel 237 mit seinem einen Schenkel am Bügel 236 festgeschraubt (Schrauben 244) und mit seinem anderen Schenkel an der Wand 18 (Schraube 230). Dabei durchsetzt die Stiftverriegelung 214 eine Öffnung 286 in der Wand 18.

Demgemäß sind auch den Haltewinkeln 54' und 56' entsprechende Haltewinkel 254' und 256' in nicht dargestellter Weise an der Sitzschale 14 beispielsweise an der Wand 18 starr befestigt. Der von der Stiftverriegelung 214 entferntere Haltewinkel 254' ist in Fig. 8 angedeutet. Aus Fig. 8 ist weiterhin zu entnehmen, daß die Stiftverriegelung 214. gegenüber der. Stiftverriegelung 114 um ihre Längsachse verdreht ist, derart, daß einer der Stifte 226 in bezug auf den strichliert angedeuteten Elektromagneten 216 links oben angeordnet ist und der andere Stift 226 rechts unten.

Die in den Fig. 2 und 8 dargestellte Stiftverriegelung 214 befindet sich in ihrer Blockier-Stellung, in der der Magnetanker 220 samt Stiftträger 224 von der nichtdargestellten, in der Hülse 246 angeordneten Schraubendruckfeder in Richtung des Pfeils F gedrückt wird, bis schließlich einer der Stifte 226 (nämlich der vom Schwenklagerbolzen 88 radial entferntere) in eine Ausnehmung 268'' des Doppelarmhebels 79' eingefahren ist.

Wie der Fig. 8 zu entnehmen ist, ist der dem Za hnsektor 84 des gegenürerliegenden Doppelarmhebels 79 entsprechende Teil des Doppelarmhebels 79' ebenfalls angenähert kreissektorförmig (wenn auch ohne Umfangsverzahnung); dieser Kreissektor ist mit 84' bezeichnet. Während die Zahnstange 38 eine einzige lineare Reihe von Ausnehmungen 168 aufweist, sind beim Kreissektor 84' zwei derartige Reihen von Ausnehmungen vorgesehen, nämlich die ersten Ausnehmungen 268' auf einem zur Achse des Bolzens 88 konzentrischen Kreisbogen kleineren Durchmessers und Ausnehmungen 268'' auf einem entsprechenden Kreisbogen größeren Durchmessers. Bei dieser besonders kompakten Anordnung von Ausnehmungen wird wiederum erreicht, daß in sämtlichen möglichen Drehstellungen (Drehung in Richtung des Doppelpfeils F) wenigstens einer der Stifte 226 auf eine Ausnehmung 268' bzw. 268'' der jeweils diesem Stift zugeordneten Reihe von Ausnehmungen trifft.

Diese Bedingung ist beispielsweise dann erfüllt, wenn bei unverändertem Stiftdurchmesser d von 9mm und Stiftabstand f von 36mm der Durchmesser g der innenliegenden, kreisförmigen Ausnehmungen 268' 16mm beträgt bei einem Winkel α zwischen den Mittelpunkten benachbarter Ausnehmungen 268' von ca. 42°; die Länge h der langlochähnlichen, bogenförmig gekrümmten außenliegenden Ausnehmungen 268' beträgt ca. 32mm; der Winkel ß zwischen den Mittelpunkten benachbarter Ausnehmungen 268'' beträgt etwa 43°.

In den Fig. 9 und 10 ist eine weitere Ausführungsform 79'' des Doppelarmhebels dargestellt, die sich von der gemäß Fig. 8 zum einen dadurch unterscheidet, daß anstelle von zwei außenliegenden Ausnehmungen 268'' gemäß Fig. 8 drei derartige Ausnehmungen 268'' vorgesehen sind. Außerdem ist die entsprechende Stiftverriegelung 214 anders orientiert, so daß einer der Stifte 226 rechts oben und der andere links unten in bezug auf den Elektromagneten 216 angeordnet sind. Man erreicht durch diese Anordnung einen größeren möglichen Schwenkwinkel in Richtung G des Doppelarmhebels 79''. Die Anzahl der innenliegenden kreisförmigen Ausnehmungen 268' ist weiterhin drei. In Fig. 10 erkennt man schließlich eine Lageröffnung 290 für den Bolzen 88 sowie eine geriffelte Offnung 292 zur drehfesten Verbindung mit dem Kupplungsrohr 104 über den Kupplungsbolzen 106 (Fig. 2). In Fig. 10 ist ferner strichpunktiert angedeutet eine Verstärkungslasche 294, die ebenso beim Doppelarmhebel 79' gemäß Fig. 2 vorgesehen ist. Das vom Kreissektor 84' bzw. 84'' jeweils ferne Ende des Doppelarms 79' bzw. 79'' umgreift zusammen mit der Verstärkungslasche 294 gabelartig die Kupplungslasche 100.

Ebenso wie die Stiftwerriegelung 114 ist auch die Stiftverriegelung 214 stets dann in ihrem Blockierzustand, wenn die hintere Neigungsverstelleinrichtung 24 nicht betätigt wird. Desgleichen ist eine Verzögerungsschaltung vorgesehen, die dafür sorgt, daß der entsprechende Verstellmotor erst dann in Gang gesetzt wird, wenn die Blockierung der Stiftverriegelung gelöst ist. Die Stiftwerriegelung 214 wird erst nach Bewegungsstillstand der Neigungsverstelleinrichtung 24 durch Abschalten des Haltestroms in ihren Blockierzustand gebracht.

Die vorstehend beschriebene Stiftverriegelung 214 kann allgemein bei beliebigen schwenkenden Teilen der Sitzverstellung eingesetzt werden, um diese zu blockieren und dadurch hohe Kräfte problemlos weiterleiten zu können. Gegebenenfalls kann an sämtlichen vier Doppelarmhebeln 77 und 79 bzw. 79' der Sitzverstellung 10 eine derartige Stiftverriegelung eingesetzt werden. Auch kann wahlweise an beiden Ritzeln 52 der Längsverstelleinrichtung 20 jeweils eine Stiftverriegelung 114 montiert werden. Anstelle der Befestigung der Beckengurtenden an der Verstellschiene 30 können auch andere Befestigungspunkte, so z.B. an der Sitzschale 14, gewählt werden. Weiterhin lassen sich die Stiftverriegelungen auch mit Vorteil dann einsetzen, wenn, wie eingangs erwähnt, die Längsverstelleinrichtung 20 oberhalb der Neigungsverstelleinrichtungen 22 und 24 liegt. Schließlich könnte auch das Gelenk zwischen Rückenlehne und Sitz durch eine Stiftwerriegelung ähnlich der Stiftverriegelung 214 gesichert werden.

Zum Doppelarmhebel 79'' gemäß Fig. 9 und 10 ist nachzutragen, daß hier de Winkel α ca. 44° und der Winkel β ca. 41° beträgt; der Durchmesser g beträgt 16mm und die Länge h 34mm; die Ausnehmungen 268' liegen auf einen Kreisbogen mit Radius $r_1 = 50$mm Ausnehmungen 268'' liegen auf einem kreisbogen mit Radius $r_2 = 104$mm.

## Patentansprüche

1. Sitzverstellung (10), insbesondere für einen Kraftfahrzeugsitz, mit einer mittels einer Stiftverriegelung (114) blockierbaren Längsverstelleinrichtung (20) und/oder zumindest einer mittels einer Stiftverriegelung (214) blockierbaren Neigungs- bzw. Höhenverstelleinrichtung (22, 24) für den Sitz, wobei die Stiftverriegelung (114; 214) mehrere in einer Stange der Längsverstelleinrichtung (20) bzw. in einem gegenüber der Stiftverriegelung (214) verschwenkbaren Teil (79'; 79'') angeordnete Stiftausnehmungen (168; 268'; 268'') umfaßt, in welche, der jeweiligen Verstellposition entsprechend, ein Stift (126; 226) blockierend einrückbar ist und zur kontinuierlichen Sitzverstellung wenigstens zwei in Blockierrichtung (E) vorgespannte Stifte (126; 226) vorgesehen sind, von welchen in jeder möglichen Verstellposition zumindest ein Stift in eine der Stiftausnehmungen (168; 268; 268'') blockierend einrückbar ist, dadurch gekennzeichnet,

daß die Stiftverriegelung (114; 214) mit einem in eine Blockierstellung mittels einer Schraubendruckfeder (150) vorgespannten Elekto-Magnetanker (120; 220) ausgebildet ist, daß die Stifte (126; 226) gegenüber einem gemeinsamen, am Elektro-Magnetanker (120; 220) befestigten Stiftträger (124; 224) jeweils für sich in Bewegungsrichtung (C) der Stifte (126; 226) verschiebbar gelagert und in Blockierrichtung (E) vorgespannt sind, und daß beidseits der als Zahnstange (38) ausgebildeten Stange bzw. des verschwenkbaren Teils (79'; 79'') Haltewinkel (54, 56; 54', 56'; 254', 256') vorgesehen sind mit dem Durchmesser und der Lage der wenigstens zwei Stifte (126; 226) angepaßten Löchern (166), in welche die Stifte (126; 226) einrückbar sind.

2. Sitzverstellung nach Anspruch 1, dadurch gekennzeichnet, daß bei einer Längsverstelleinrichtung (20) mit zwei in Verstellrichtung (A) nebeneinander angeordneten Stiften (126) die in Verstellrichtung (A) genommene Breite (D) der Ausnehmungen (168) gleich der Summe aus dem jeweiligen Durchmesser (d) der beiden Stifte (178) und dem dritten Teil des Abstandes (f) der Stiftachsen ist, und daß der Abstand (a) der Mitten benachbarter Ausnehmungen (168) gleich zwei Drittel des Abstandes (f) der Stiftachsen ist.

3. Sitzverstellung nach Anspruch 1 oder 2, dadurch gekennzeichnet, daß die Ausnehmungen (268'; 268'') im verschwenkbaren Teil (79'; 79'') auf mehreren, der Anzahl der Stifte (226) entsprechenden, konzentrischen Kreisbögen angeordnet sind.

4. Sitzverstellung nach Anspruch 3, dadurch gekennzeichnet, daß die Ausnehmungen (268'; 268'') in einem Arm des als zweiarmiger Schwenkhebel (79; 79'') ausgebildeten verschwenkbaren Teils vorgesehen sind, der mit einem weiteren zweiarmigen, mit einem ritzelgetriebenen Zahnsektor (84) versehenen Schwenkhebel (79) drehfest verbunden ist.

5. Sitzverstellung nach Anspruch 1, gekennzeichnet durch eine in einer am Stiftträger (124) angebrachten Lagerhülse (154) für die Stifte (126) angeordnete Vorspannfeder (162), die sich einerseits an einem durchmesservergrößerten Bund (163) des Stiftes (126) und andererseits an einen Lagerring (158) an einem Ende der Lagerhülse (154) abstützt.

6. Sitzverstellung nach einem der vorhergehenden Ansprüche, dadurch gekennzeichnet, daß die Stiftverriegelung (114; 214) elektromechanisch mittels wenigstens eines Elektromagneten (116; 216) betätigbar ist und dann blockiert, wenn keine Steuerspannung anliegt.

7. Sitzverstellung nach Anspruch 6, dadurch gekennzeichnet, daß bei mittels Verstellmotoren betätigbarer Sitzverstellung (10) eine Verzögerungsschaltung vorgesehen ist, die die Verstellmotoren erst nach erfolgter Entriegelung der Stiftverriegelung (114; 214) in Betrieb setzt und umgekehrt die Stiftverriegelung erst nach Stillstand der Verstellmotoren verriegelt.

**Revendications**

1. Système de réglage de siège (10), notamment pour un siège de véhicule automobie, avec un dispositif de réglage longitudinal (20) pouvant être bloqué par un dispositif de verrouillage à doigts (114), et/ou avec au moins un dispositif de réglage de l'inclinaison ou de la hauteur du siège (22, 24) pouvant être bloqué par un dispositif de verrouillage à doigts (214), le dispositif de verrouillage à doigts (114, 214) comprenant plusieurs évidements (168, 268', 268'') disposés dans une tringle du dispositif de réglage longitudinal (20) ou selon le cas dans un élément (79', 79'') pouvant pivoter par rapport au dispositif de verrouillage à doigts (214), évidements dans lesquels un doigt (126, 226), correspondant à la position de réglage sélectionnée, peut être engagé avec effet de blocage, et au moins deux doigts (126, 226), précontraints dans la direction de blocage (E), étant prévus pour le réglage en continu du siège, au moins un de ces deux doigts pouvant être engagé avec effet de blocage dans un des évidements (168, 268', 268'') dans chacune des positions de réglage possibles, caractérisé en ce que le dispositif de verrouillage à doigts (114, 214) comporte une armature électromagnétique (120, 220) précontrainte dans une position de blocage au moyen d'un ressort hélicoïdal de compression (150), en ce que chacun des doigts (126, 226) est monté de façon coulissante dans la direction de déplacement (C) des doigts (126, 226), et précontrant dans la directon de blocage (E), par rapport à un support de doigts commun (124, 224) fixé à l'armature électromagnétique (120, 220), et en ce qu'il est prévu, de part et d'autre de la tige conformée en crémaillère (38) ou selon le cas de l'élément pivotant (79', 79''), des équerres de maintien (54, 56, 54', 56', 254', 256') munies d'orifices (166) adaptés au diamètre et à la position des au moins deux doigts (126, 226), orifices dans lesquels les doigts (126, 226) peuvent être engagés.

2. Système de réglage de siège selon la revendication 1, caractérisé en ce que, pour un dispositif de réglage longitudinal (20) avec deux doigts (126) placés l'un à côté de l'autre dans la direction de réglage (A), la largeur (D) des évidements (168) considérée dans le sens de réglage (A) est égale à la somme du diamètre (d) de chacun des deux doigts (126) et du tiers de l'écartement (f) des axes des doigts, et en ce que l'écartement (a) des entres des évidements voisins (168) est égal aux deux-tiers de l'écartement (f) des axes des doigts.

3. Système de réglage de siège selon la revendication 1 ou 2, caractérisé en ce que les évidements (268', 268'') ménagés dans l'éléments pivotant (79, 79'') sont disposés selon plusieurs arcs de cercle concentriques, correspondant au nombre de doigts (226).

4. Système de réglage de siège selon la revendication 3, caractérisé en ce que les évidements (268', 268'') sont ménagés dans un bras de l'élément pivotant qui a la forme d'un levier pivotant à deux bras (79, 79''), et qui est lié en rotation à un autre levier pivotant à deux bras (79), ce dernier étant muni d'un secteur denté (84) entraîné par un pignon.

5. Système de réglage de siège selon la revendication 1, caractérisé par un ressort de précontrainte (162) pour les doigts (126), qui est disposé dans une douille de palier montée sur le support de doigts (124), et qui s'appuie d'une part sur un collet (163) correspondant à une augmentation de diamètre du doigt (126) et d'autre part sur une bague d'appui (158) disposée à une extrémité du manchon de palier (154).

6. Système de réglage de siège selon l'une des revendications précédentes, caractérisé en ce que le dispositif de verrouillage à doigts (114, 214) est actionnable électromécaniquement au moyen d'au moins un électro-aimant (116, 216), et est bloqué en l'absence de tension de commande.

7. Système de réglage de siège selon la revendication 6, caractérisé en ce que, dans le cas d'un système de réglage de siège (10) actionnable au moyen de moteurs de réglage, il est prévu un circuit de temporisation qui ne met en marche les moteurs de réglage qu'après le déverrouillage effectif du dispositif de verrouillage à doigts (114, 214), et, inversement, qui ne verrouille le dispositif de verrouillage à doigts qu'après l'arrêt des moteurs de réglage.

**Claims**

1. Seat adjustment, especially for a motor vehicle seat, with a longitudinal adjustment device (20) blockable by means of a bolt lock (114) and/or with at least one inclination or height adjustment device (22, 24) for the seat, blockable by means of a bolt lock (214), whereby the bolt lock (114; 214) incorporates several bolt recesses (168; 268'; 268'') arranged in a bar of the longitudinal adjustment device (20) or in a part (79'; 79'') pivotable with respect to the bolt lock (214), into which, corresponding to the respective adjustment position, a bolt (126; 226) can engage with a blocking action, and at least two prestressed bolts (126; 226) are provided in the blocking direction (E), and of which at least one bolt can engage with a blocking action in one of the bolt recesses (168; 268'; 268'') in every possible adjustment position, characterised in that the bolt lock (114; 214) is formed with a prestressed electro-magnetic anchor (120; 220) in a blocking position by means of a compression spring, the bolts are each mounted so as to be independently displaceable in the direction of movement (C) of the bolts (126, 226) relative to a common bolt carrier (124; 224) mounted on the electro-magnetic anchor (120; 220), and are prestressed in the blocking direction (E), and holding angles (54, 56; 54', 56'; 254', 256') are provided on both sides of the bar formed as a shaft (38) or of the pivotable part (79; 79'') with holes (166) adapted to the diameter and the position of at least two bolts (126; 226), into which holes the bolts (126; 226) can engage with a blocking action.

2. Seat adjustment according to claim 1, characterised in that, with a longitudinal adjustment device (20) with two bolts (126) arranged next to one another in the adjustment direction (A), the width (D) of the recesses (168), which is taken in the adjustment direction (A) is equal to the sum of the respective diameter (d) of the two bolts (178) and the third portion of the distance (f) between the bolt axes, and in that the distance (a) between the centres of adjacent recesses (168) is equal to two thirds of the distance (f) between the bolt axes.

3. Seat adjustment according to claim 1 or 2, characterised in that the recesses (268'; 268'') in the pivotable part (79'; 79'') are arranged on several concentric circular arcs corresponding to the number of bolts (226).

4. Seat adjustment according to claim 3, characterised in that the recesses (268'; 268'') are provided in one arm of the pivotable part formed as a two-armed pivoting lever (79; 79'') and which is connected fixedly in terms of rotation to a further two-armed pivoting lever (79) provided with a pinion-driven toothed quadrant (84).

5. Seat adjustment according to claim 1, characterised by a prestressing spring (162) which is arranged in a bearing sleeve (154), attached to the bolt carrier (124) for the bolts (126) and which is supported on the one hand on a collar (163) of increased diameter of the bolt (126) and on the other hand on a bearing ring (158) at one end of the bearing sleeve (154).

6. Seat adjustment according to one of the preceding claims, characterised in that the bolt lock (114; 214) can be actuated electromechanically by means of at least one electromagnet (116; 216) and is blocked when there is no control voltage applied.

7. Seat adjustment according to claim 6, characterisaed in that, with a seat adjustment (10) which can be actuated by means of adjusting motors, there is provided a delay circuit which starts the adjusting motors only after the bolt lock (114; 214) has been released and conversely locks the bolt lock only after the adjusting motors have stopped.

FIG.1

EP 0 072 524 B2

# FIG.2

EP 0 072 524 B2

FIG. 3

EP 0 072 524 B2

FIG.4A

FIG.4B

FIG.4C

FIG.4D

EP 0 072 524 B2

FIG.6

FIG.5

FIG. 7A

FIG. 7B

FIG.8

FIG. 9

FIG.10

FIG. 11